# EUROPÄISCHE PATENTANMELDUNG

(11) **EP 4 307 534 A1**
(43) Veröffentlichungstag der Anmeldung: **17.01.2024**
(21) Anmeldenummer: 22184845.0
(22) Anmeldetag: 14.07.2022
(51) Int. Cl.: H02K 5/08, H02K 15/12, H02K 1/04

(54) **ANORDNUNG EINES STATORS MIT TEILWEISE POLYMERGEHÄUSE FÜR EINE DYNAMOELEKTRISCHE MASCHINE SOWIE DESSEN HERSTELLUNGSVERFAHREN ODER VERWENDUNG**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)
(74) Vertreter: Siemens Patent Attorneys

(57) **Zusammenfassung**

Die Erfindung betrifft ein Verfahren zur Herstellung einer Anordnung (ARG) umfassend einen Stator (STT) und ein Gehäuse (OCS) für eine dynamoelektrische Maschine, bei dem eine Anzahl von Statorblechen (SMS) zu einem Blechpaket (SMP) zusammengestellt sind, umfassend: Stapelweises Anordnen der Statorbleche (SMS) zu einem Blechpaket (SMP) entlang einer Axialrichtung. Zur Vereinfachung der Herstellung sieht die Erfindung vor, dass ein Aufbringen eines gefüllten Verbundpolymers (GPF) zumindest auf die radiale Außenseite auf das Blechpaket (SMP), so dass eine Schicht oder mehrere aufgebrachte Schichten des gefüllten Verbundpolymers (GPF) das Gehäuse (OCS) zumindest teilweise ausbildet.

Daneben betrifft die Erfindung auch eine Anordnung umfassend einen Stator (STT) und ein Gehäuse (OCS) einer dynamoelektrischen Maschine sowie die Verwendung einer derartigen Anordnung (ARG) für einen Prozess zur Herstellung oder Verarbeitung von Nahrungsmitteln, pharmazeutischen Produkten oder kosmetischen Produkten.

## Beschreibung

Die Erfindung betrifft ein Verfahren zur Herstellung einer Anordnung umfassend einen Stator und ein Gehäuse für eine dynamoelektrische Maschine, bei dem eine Anzahl von Statorblechen zu einem Blechpaket zusammengestellt sind, umfassend stapelweises Anordnen der Statorbleche zu einem Blechpaket entlang einer Axialrichtung. Daneben betrifft die Erfindung auch eine Anordnung umfassend einen Stator und ein Gehäuse einer dynamoelektrischen Maschine sowie die Verwendung einer derartigen Anordnung für einen Prozess zur Herstellung oder Verarbeitung von Nahrungsmitteln, pharmazeutischen Produkten oder kosmetischen Produkten.

Elektrische oder elektrodynamische Maschinen, wie Elektromotoren werden üblicherweise nach dem Einzug der Kupferwicklung und dem Imprägnieren mittels eines Aluminiumgehäuse gekapselt, welches dem Motor als Einhausung, also Passivierung gegen Umwelteinflüsse und als Kühlkörper dient. Das Metallgehäuse oder Aluminiumgehäuse, welches häufig mit Kühlrippen den Wärmeübergang zur konvektiven Luft begünstigt, wird hierbei in einem energetisch aufwendigen Prozess aufgeschrumpft. Daneben ist die Herstellung beispielsweise eines Aluminiumdruckgussgehäuses ein energetisch sehr aufwendiger Prozess.

Gerade kleine Achshöhen - also geringer Abstand zwischen dem Mittelpunkt der Motorwelle und einer parallel zur Motorwelle angeordneten Montagefläche - werden am Markt durch den Preisdruck sehr günstig verkauft, wodurch eine wirtschaftliche Herstellung bei gleichzeitiger Beibehaltung der Qualitätsanforderungen der Motoren immer anspruchsvoller wird.

Ausgehend von den Problemen und Nachteilen des Standes der Technik hat es sich die Erfindung zur Aufgabe gemacht an, ein Verfahren eingangs definierter Art derart weiterzubilden, dass bei gleicher Qualität und Funktion die Herstellungskosten reduziert werden.

Zur erfindungsgemäßen Lösung der Aufgabe wird ein Verfahren eingangs definierter Art mit den zusätzlichen Merkmalen des Kennzeichens des unabhängigen Anspruchs 1 vorgeschlagen. Daneben schlägt die Erfindung eine entsprechende Anordnung umfassend einen Stator und ein Gehäuse einer dynamoelektrischen Maschine sowie die Verwendung einer derartigen Anordnung für einen Prozess zur Herstellung oder Verarbeitung von Nahrungsmitteln, pharmazeutischen Produkten oder kosmetischen Produkten. Die jeweils abhängigen Unteransprüche beinhalten vorteilhafte Weiterbildungen der Erfindung.

Im Einzelnen sieht die Erfindung vor, dass nach dem stapelweisen Anordnen der Statorbleche zu einem Blechpaket entlang einer Axialrichtung ein Aufbringen eines gefüllten Verbundpolymers, das auch in einer eher funktionalen Terminologie als Gapfillermedium bezeichnet werden kann, auf das Blechpaket zumindest auf die radiale Außenseite erfolgt, so dass eine Schicht oder mehrere aufgebrachte Schichten des gefüllten Verbundpolymers das Gehäuse zumindest teilweise ausbildet bzw. ausbilden.

Das gefüllte Verbundpolymer ist ein Polymerverbundwerkstoff. Es handelt sich also um einen Verbundwerkstoff, auch Kompositwerkstoff genannt, aus zwei oder mehr miteinander verbundenen Materialien. Das gefüllte Verbundpolymer ist ausgebildet als Teilchenverbundwerkstoff, als Partikelverbund oder Dispersionswerkstoff. Hierbei sind Teilchen in einer Matrix aus Polymerwerkstoff bzw. einem Polymer bzw. Kunststoff eingebettet.

Das Verbundpolymer ist derart ausgebildet, dass es nach dem Aufbringen unter den jeweiligen Umgebungsbedingen zu einem Feststoff aushärtet.

Der erfindungsgemäße Ersatz des Gehäuses durch eine entsprechende Ausbildung des Blechpakets reduziert die Herstellungskosten der dynamoelektrischen Maschinen bzw. Motoren deutlich. Kostenreduktion im Herstellungsprozess dieser Maschinen wurden bislang durch klassische kleinere Designänderungen durchgeführt, wodurch zum einen Material eingespart werden konnte und zum anderen ggf. die Herstellungszeit verkürzt werden konnte. Die Erfindung geht einen anderen Weg, mittels dessen ein bisher maßgebliches Bauteil ersetzt werden kann.

Das erfindungsgemäße Gehäuse - gebildet durch die Außenkontur des Blechpaketes, das mit einer Schicht des Gapfillermediums versehen ist, erfüllt alle mechanischen Anforderungen. Die Außenkontur des Blechpaketes, ist gegen äußere Einflüsse, wie Gase, Flüssigkeiten, insb. korrosive Substanzen durch das gefüllte Verbundpolymer geschützt. Das gefüllte Verbundpolymer ergibt eine optisch geschlossene und glatte Oberfläche, so dass das Produkt einen hochwertigen Eindruck macht. Das zumindest teilweise aus dem gefüllten Verbundpolymer hergestellte Gehäuse stellt eine fertigungstechnisch kostengünstige und zugleich hochwertige Lösung dar.

Gemäß einer vorteilhaften Weiterbildung besteht das Gehäuse, dass das Blechpaket umgibt, zu mindestens 50% bis 100% einer radialen Gehäusewandstärke aus einer Schicht oder mehreren aufgebrachten Schichten des gefüllten Verbundpolymers.

Gemäß einer vorteilhaften Weiterbildung weist das gefüllte Verbundpolymerbei Raumtemperatur eine Viskosität von mindestens 1000 mPas aufweist. Die Raumtemperatur ist hierbei bevorzugt die Temperatur der Umgebung im Raum, wo die Verarbeitung erfolgt. Diese Temperatur liegt in der Regel bei etwa 15° - 22°C bevorzugt 17° - 19 °C. Dieser flüssige Zustand vor oder bei der Verarbeitung vor der Härtung entspricht entweder einem unvernetzten Polymer (weil "Poly" eigentlich einen Vernetzungszustand impliziert) oder einem Reaktivharz, welches dann im Verlauf zu einem Polymer vernetzt, also härtet. Da dieser Umstand dem Fachmann aus dem Zusammenhang klar ist, wird vorliegend in der Regel vereinfachend von dem Verbundpolymer gesprochen.

Gemäß einer vorteilhaften Weiterbildung weist das gefüllte Verbundpolymer einen Zusatz von Lösemittel zur Viskositätserniedrigung zwischen 0 Gew.-% bis 5 Gew.-% auf. Dies bedeutet, dass das gefüllte Verbundpolymer vorteilhaft keinen Zusatz von Lösemittel zur Viskositätserniedrigung aufweisen kann, so dass die Viskosität hinreichend hoch ist, dass z.B. keine Kantenflucht auftreten kann. Als Kantenflucht wird das Oberflächenspannungs-bedingte Zurückziehen einer flüssigen Schicht, z.B. einer Lackschicht, von Radien bezeichnet. Grundsätzlich kann bei einem nicht mit Lösemittel versetztem Harz auch Kantenflucht auftreten, wenn die Viskosität niedrig genug ist. Vermieden wird Kantenflucht entweder durch eine ausreichend hohe Grund-Viskosität (was die Verarbeitung/das Aufbringen allerdings erschwert) oder aber durch erfindungsgemäße sehr schnell einsetzende viskositäts-erhöhende Effekte, wie Abdampfen des Lösemittels oder Thixotropierung oder beides. Die gleichmäßige Benetzung und Umschließung mit einer ebenso dicken Schicht wie es beispielsweise bei einer ebenen Fläche erfolgen würde ist eine erfolgreiche Vermeidung von Kantenflucht. Damit das gelingt, ist es vorteilhaft, wenn das Basismaterial sehr hochviskos und thixotropiert ist.

Um einen sprühenden Auftrag zu ermöglichen ist es vorteilhaft, wenn das gefüllte Verbundpolymer mittels eines schnell verdunstenden Lösemittels sprühbar gemacht wird. Besonders zweckmäßig ist der Zusatz so ausgewählt und bemessen, dass bei Sprühen signifikante Anteile verdunsten und die gewünschte Viskosität bei Auftreffen auf die Oberfläche oder kurz danach eintritt.

Eine vorteilhafte Weiterbildung der Erfindung sieht vor, dass das gefüllte Verbundpolymer Partikel enthält. Die Partikel umfassen hierbei mindestens eine Zutat von:
- thermisch leitfähigen Partikeln, insbesondere aufweisend Bornitrid (BN) und/oder Aluminiumoxid (Al2O3) und/oder Quarzmehl und/oder Quarz-gut,
- flammhemmenden Partikeln, insbesondere Aluminiumhydroxid (Al(OH)3),
- elektrisch isolierenden Partikeln, insbesondere Glimmer. Die Füllstoffpartikel erhöhen die mechanische Festigkeit der Schicht, erhöhen die Wärmeleitfähigkeit, können die thermische Ausdehnung positiv beeinflussen und haben den verarbeitungstechnischen Vorteil, dass die Grundviskosität des Materials angehoben wird, sodass eben nach Abdampfen des o.g. Lösemittels keine Kantenflucht mehr auftritt.

Eine vorteilhafte Weiterbildung der Erfindung sieht vor, dass das gefüllte Verbundpolymer eine thixotrope Flüssigkeit ist. Bei einem sprühenden Auftrag wird - auch bei geeigneter Zusammensetzung mit einem Lösemittel - die Schicht des gefüllten Verbundpolymers direkt beim Auftreffen - ggf. unterstützt durch die Füllstoffe - hochviskos und verbleibt mit homogener Schichtdicke auch an Radien haften.

Besonders zweckmäßig sieht eine vorteilhafte Weiterbildung der Erfindung vor, dass vor dem Aufbringen ein Thixotropieren des gefüllten Verbundpolymers mittels Zusatzes eines Thixotropiermittels erfolgt. Zum Thixotropieren kann ein anorganischer Verdicker in geeigneter Menge zugesetzt werden.

Eine vorteilhafte Weiterbildung der Erfindung sieht vor, dass das gefüllte Verbundpolymer als hochgefülltes Verbundpolymer ausgebildet ist. Das hochgefüllte Verbundpolymer kann mit einen Partikelanteil von bis zu 80 Gew.-% ausgebildet sein.

Die Erfindung bezieht sich auch auf eine Anordnung umfassend einen Stator und ein Gehäuse einer dynamoelektrischen Maschine, bei dem eine Anzahl von Statorblechen zu einem Blechpaket stapelweise entlang einer Axialrichtung benachbart zu einem Blechpaket angeordnet sind, wobei die Statorbleche zueinander zumindest bereichsweise einen axialen Spalt aufweisen, wobei das Blechpaket zumindest radial außen mit einer Schicht eines gefüllten Verbundpolymers versehen ist, so dass die aufgebrachte Schicht des gefüllten Verbundpolymers zumindest teilweise das Gehäuse ausbildet. Der axiale Spalt ist in der Regel fertigungsbedingt, wenn auch idealerweise sehr klein - im Bereich einiger µm. Die Bleche müssen aus elektrischen Gründen zueinander isoliert sein (Blechlack 0,5-10µm) um Wirbelströme zu vermeiden. Beim Stapeln und Paketieren der Bleche kommt es aufgrund der nicht 100%igen Planarität zu Spalten, die dann eine Beschichtung radial außen aufgrund von z.B. Kapillareffekt erschweren. Diese Anordnung ist bevorzugt nach einem Verfahren gemäß mindestens einem der Ansprüche 1-12 oder nach einem vorliegend beschriebenen Verfahren gemäß der Erfindung oder einer Weiterbildung der Erfindung hergestellt.

Eine vorteilhafte Weiterbildung der Erfindung sieht vor, dass zumindest einige Statorbleche mindestens einen nach radial außen gegenüber der benachbarten Umfangskontur fortgesetzten Rippenabschnitt aufweisen, der sich zumindest über einen Abschnitt des Umfangs erstreckt.

Um die Kühlrippenstruktur an der endgültigen Außenkontur des Motors herzustellen ist es bevorzugt, dass das Blechpaket an sich, also die einzelnen Statorbleche, eine entsprechende Außenkontur-Stanzung aufweisen. Diese Realisierung der Kühlrippen ist ohne zusätzlichen Aufwand zu erreichen und die Statorbleche leiten die Wärmeleistung ohne zusätzliche Widerstände aus beispielsweise Übergängen zwischen den Blechen und einem aufgeschrumpften Gehäuse aus dem Stator ab.

Weiterhin bezieht sich die Erfindung auf eine Verwendung der erfindungsgemäßen Anordnung nach Anspruch 11, 12 oder 13 oder eine Anwendung des Verfahrens für einen Prozess zur Herstellung oder Verarbeitung von Nahrungsmitteln, pharmazeutischen Produkten oder kosmetischen Produkten. Daneben können die Motoren auch in Kranen, generellen Industrieanlagen, Kompressoren usw. verwendet werden.

Daneben betrifft die Erfindung auch eine Verwendung eines aushärtend ausgebildeten, thixotropierten, gefüllten als Gehäuse eines Stators für eine dynamoelektrische Maschine. Diese Verwendung ist sinnvoll kombinierbar mit allen hier offenbarten vorteilhaften Weiterbildungen der Erfindung.

Die oben beschriebenen Eigenschaften, Merkmale und Vorteile dieser Erfindung sowie die Art und Weise, wie sie erreicht werden, werden im Lichte der folgenden Beschreibung und Ausführungsformen, die im Kontext der Zeichnungen näher beschrieben werden, klarer und verständlicher. Diese nachfolgende Beschreibung beschränkt die Erfindung nicht auf die enthaltenen Ausführungsformen. Gleiche Komponenten oder Teile können mit den gleichen Referenzzeichen in verschiedenen Bildern gekennzeichnet werden. Es versteht sich, dass eine bevorzugte Ausführungsform der vorliegenden Erfindung auch eine beliebige Kombination der abhängigen Ansprüche oder der hier beschriebenen Ausführungsformen mit den Merkmalen des jeweiligen unabhängigen Anspruchs sein kann. Es zeigen:
- Figur 1: eine schematische, vereinfachte Darstellung eines Verfahrens nach der Erfindung als Flussdiagramm,
- Figur 2: eine schematische, vereinfachte, dreidimensionale Darstellung eines Blechpakets ohne Rippen,
- Figur 3: eine schematische, vereinfachte, dreidimensionale Darstellung eines Blechpakets mit Rippen,

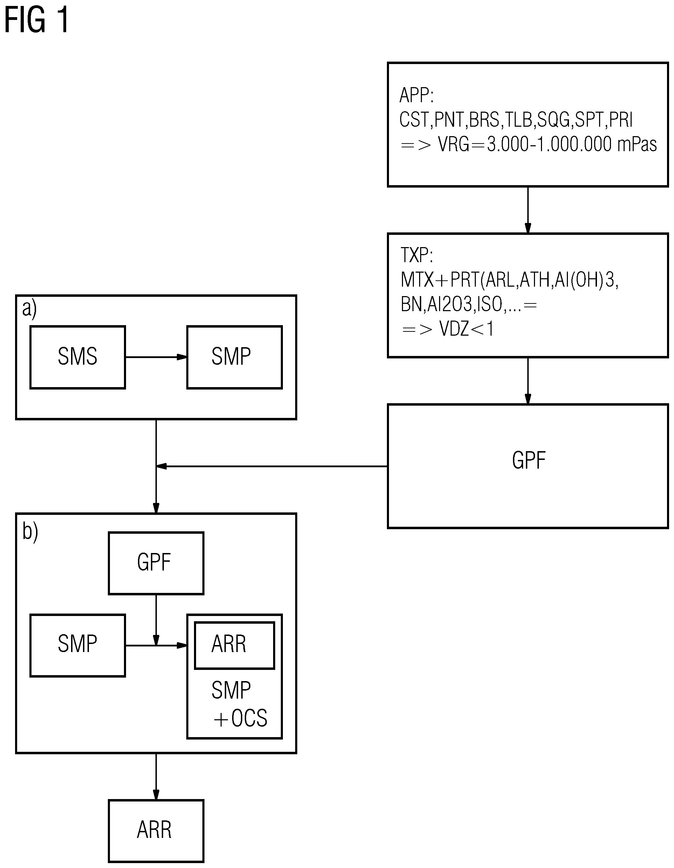

Figur 1 zeigt eine schematische, vereinfachte Darstellung eines Verfahrens zur Herstellung einer Anordnung ARG umfassend einen Stator STT und ein Gehäuse OCS für eine dynamoelektrische Maschine als Flussdiagramm in einer Abfolge von Schritten (a), (b).

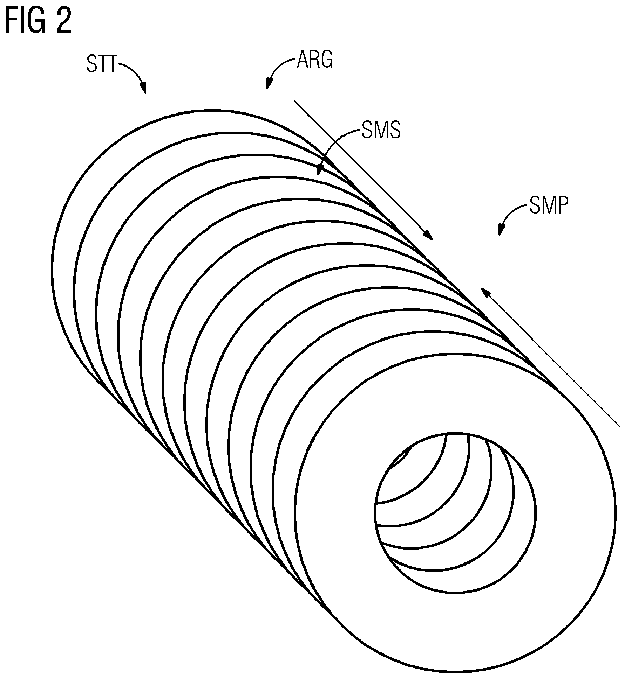

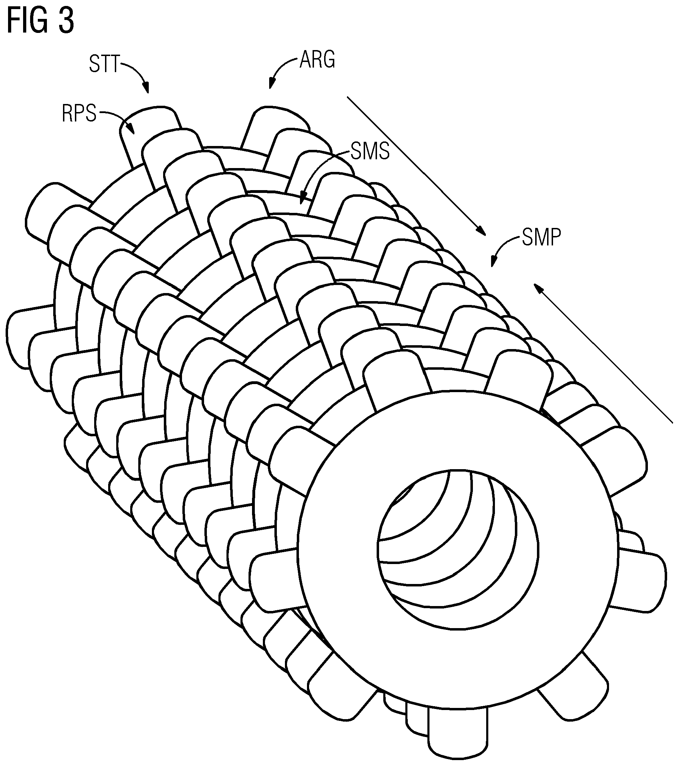

Der Stator STT umfasst eine Anzahl von Statorblechen SMS, die zu einem Blechpaket SMP zusammengestellt sind, wie dies auch in Figuren 2, 3 gezeigt ist. In der Figur 3 weisen die einzelnen Statorbleche SMS einen nach radial außen gegenüber der benachbarten Umfangskontur fortgesetzten Rippenabschnitt RPS aufweisen, der sich zumindest über einen Abschnitt des Umfangs erstreckt.

Schritt (b) sieht vor, dass ein gefüllter Verbundpolymer GPF zumindest auf die radiale Außenseite auf das Blechpaket SMP aufgebracht wird, so dass eine Schicht oder mehrere aufgebrachte Schichten des gefüllten Verbundpolymers GPF das äußere Gehäuse OCS der dynamoelektrischen Maschine zumindest teilweise ausbildet, bevorzugt vollständig.

Bevor der Schritt (b) eingeleitet wird, wird zunächst festgelegt, wie der Aufbringprozess APP erfolgen soll. Hierzu stehen verschiedene Optionen zur Verfügung. Das Aufbringen kann erfolgen mittels: Gießens CST, Streichens PNT, Pinselns BRS, Dickschichtpinselns TLB, Rakelns SQG, Spachtelns SPT, Einpressens PRI. In Abhängigkeit davon wird ein Viskositätsbereich (VRG) des gefüllten Verbundpolymers (GPM) von 3.000-1.000.000 mPas festgelegt. Es ist hierzu vorgesehen, dass für ein Aufbringen mittels Gießens CST, Streichens (PNT), Pinselns BRS, die Viskosität VSC im Bereich bis zu 10.000 mPas liegt und für ein Aufbringen mittels Spachtelns oder Einpressens eine Festlegung der Viskosität im Bereich ab 10.000 mPas erfolgt.

Von dem ermittelten Viskositätsbereich VRG ausgehend wird eine Viskosität des gefüllten Verbundpolymers GPM mittels Zumischens von Verdickungsmitteln und/oder Zumischens von Partikeln PRT und/oder mittels Thixotropierens TXP hergestellt. Das gefüllte Verbundpolymer GPM wird als hochgefülltes Verbundpolymer GPM hergestellt mit einen Partikelanteil PRT von bis zu 80 Gew.-%. Das Thixotropieren erfolgt bevorzugt mittels Zusatzes eines anorganischen Verdickers ATH oder mittels Zusatzes von 0,1-5 Gew.-%, bevorzugt 0,1-2 Gew.-% pyrogener Kieselsäure ARL. Auf diese Weise ergibt sich das gefüllte Verbundpolymer GPF als eine thixotrope Flüssigkeit die bei Raumtemperatur, ohne Lösemittel ein hochviskoses Material ist, welches nach der Applikation ähnlich einer Paste formstabil bleibt und dabei Substratkanten und Substratrundungen in einer homogenen Schicht benetzt und umschließt.

Als gefülltes Verbundpolymer GPF kann ein sogenannter Gapfiller verwendet werden, der z.B. Epoxy, PU oder PEI als Matrix aufweist. Dieses gefüllte Verbundpolymer GPF ist dabei lösemittelfrei und wahlweise mit z.B. thermisch leitfähigen Partikeln (wie z.B. BN, Al2O3, Quarzmehl, Quarzgut), flammhemmenden Partikeln (wie z.B. Al(OH)3) oder elektrisch isolierenden Partikeln (Glimmer, und die davor genannten) gefüllt sein. Lösemittel zur Viskositätserniedrigung sollte bei einer Verguss- / Verkapselungsanwendung nicht angewendet werden, da keine Entfernung des Lösemittels aus dicken Schichten möglich ist, ohne Poren, Schäumeffekte und generell Fehlstellen zu erzeugen. Ein Viskositätsbereich von 3.000-1.000.000 mPas ist vorteilhaft, wobei fließfähige (zum Beispiel gießbare, pinselbare, dispensierbare, aber nicht sprühbare) gefüllte Verbundpolymere GPF eher am unteren Intervallrand sind und höherviskose ab ca. 10.000 mPas mittels Spachtelns, Einpressens appliziert werden können.

Ein entscheidender Aspekt bei der sprühenden Verarbeitung liegt darin, dass ein hochviskoses System, insbesondere aus der Klasse der Gapfiller oder Vergussmassen für sehr kurze Zeit (deutlich kürzer als die herkömmlicher Lacke) ab der Applikation bis zum gewünschten Benetzen des Substrats niederviskos, <5000mPas, zu gestalten, sodass ein additives Aufsprühen einer Deckschicht auf eine unregelmäßige Substratoberfläche (Kühlrippen-Radien und Blechkanten der Außenkontur) möglich ist, ohne dabei die Nachteile üblicher Lacksysteme (Einkapillieren zwischen die Bleche, Kantenflucht) in Kauf nehmen zu müssen. Durch das "Sprühbar-machen" der Formulierung wird der Notwendigkeit der Designfreiheitsgrade der äußeren Gehäusekontur genüge getan.

Eine kurzzeitige Viskositätserniedrigung und Sprühbarmachung wird bevorzugt durch zwei kombinierte Maßnahmen erzeugt.
1. Thixotropierung des Gapfillers / Vergussmaterials, welche sowohl auf Basis von Aerosil (pyrogener Kieselsäure), also einem anorganischen Additiv zu ca. 0,1-2 Gew.-%, erzeugt werden kann, oder Beimischen von anorganischen Verdickern, wie sie z.B. in der Anmeldung WO2015197647A1 von der Firma BYK (Altana Group) beschrieben sind. Beide Wege führen dazu, dass sich die Viskosität unter Scherung deutlich reduziert (auf den Wert des Ausgangsmaterials ohne Thixotropiermittel), sich aber nach wenigen Sekunden Ruhe auf einen Wert steigert, welcher einen Faktor 10-1000 darüber liegen kann, je nach Form und Anteil des Thixotropieradditives.
2. Um den Viskositätswert des Ausgangsproduktes zu erniedrigen, soll zum anderen ein kompatibles Lösemittel (oder ein Gemisch aus verschiedenen) zum Einsatz kommen (5-40 Gew.-%), welches eine niedrige Verdunstungszahl (=relativ schnelles Abdampfen, Definition ist die relative Verdunstungszeit im Vergleich zu der von Diethylether mit 1) besitzt. Hierdurch wird die Mischviskosität im Ruhezustand des Materials - Thixotropieradditiv - Lösemittel - Gemischs nach Bedarf auf eine sprühbare Viskosität erniedrigt (<5000mPas).

Beim Sprühvorgang selbst erfährt das Material eine von der Düsengeometrie abhängige hohe Scherkraft, wodurch die Thixotropierung die Gesamtviskosität auf den Ruhezustandwert fallen lässt. Nach dem homogenen Sprühschichtauftrag (10-60 µm) kommt es innerhalb von Sekunden zur Überlagerung von zwei viskositätserhöhenden Effekten. Zum einen setzt die Viskositätserhöhung durch die Thixotropierung innerhalb von Sekunden ein (die gesprühte Schicht "beruhigt sich"), zum anderen verdunstet das Lösemittelgemisch mit niedriger Verdunstungszahl (VDZ<1) zügig aus der Schicht und erhöht damit sukzessive und nachhaltig die Viskosität zur ursprünglichen Höhe des Gapfillers / der Vergussmasse. Das aufgesprühte Material hat somit keine Zeit im niederviskosen Zustand nennenswert in die Zwischenblechspalte zu kapillieren sowie an den Kanten zu flüchten ("Kantenflucht") oder Tropfnasen zu bilden. Nach der Antrocknung der ersten Schicht (Verdunstung eines nennenswerten Anteils des Lösemittels, sodass die Schicht optisch trocken und matt erscheint) innerhalb weniger Minuten kann eine weitere Schicht aufgebracht werden. Aufgrund der hohen "Trocken- und Ruheviskosität" (=pastös) muss das Werkstück dabei nicht rollierend gelagert werden. Es können vielmehr ebenfalls senkrechte und überhängende Flächen besprüht werden. Es können je nach Belieben mehrere Schichten in diesem Verfahren aufgetragen werden, sodass der gewünschte Effekt der Beschichtung entsteht (optisch dicht, Korrosionsschutz, glatte Oberfläche, ...). Durch Nutzung eines Zweikomponentenharzes als Basis kann eine Härtung bei Raumtemperatur (oder ggf. leicht erhöhter Temperatur) erreicht werden. Somit ist keine weitere thermische Härtung mehr notwendig und es entsteht ein flexibler, schnellerer und CO2-freundlicher Prozess. Da keine Härtung unter Erhitzen erforderlich ist, entsteht keine thermisch bedingte Viskositätserniedrigung, was sonst zu nachteiligen Effekten führen würde.

In einer möglichen Ausführungsform wurde ein zweikomponentiges Gapfiller-Material der Firma Elantas (A Komponente MC336, B Komponente W363 TX) verwendet, welches mittels eines anorganischen Verdickers der Firma BYK (beides Altana Group) thixotropiert wurde. Es wurde A Komponente MC336 und B Komponente W363 TX in Gewichtsteilen 100 zu 7,5 gemischt und zusätzlich 15 Gewichtsteile MEK als leichtflüchtiges (niedrige Verdunstungszahl von 6) Lösemittel verwendet.

Das Aufsprühen erfolgt mit einer handelsüblichen Druckluft-Sprühpistole. Pro Lage können ca. 30-50 µm appliziert werden. Die Schichtdicke, das Sprühbild, der Sprühwinkel, usw. sind dabei individuell über Druck, Horndruck, Düsengeometrie, Vorschubgeschwindigkeit und Sprühabstand einstellbar. Eine Antrocknung von ca. 3 Minuten, d.h. nennenswerte Abdampfung des Lösemittels (MEK), ergibt eine matte Oberfläche bei Raumtemperatur. Daraufhin kann die nächste Lage gesprüht werden. Ab einer 3-fachen Beschichtung ist die Blechkontur durch eine homogene und stetige Oberfläche auf diese Weise bedeckt, so dass diese von außen betrachtet in ihren optischen und physikalischen Eigenschaften einer dünnen Kunststoffeinhausung gleichkommt. Das Einkapillieren in die Zwischenblechspalte, die Kantenflucht sowie Läufer und Tropfnasen werden aufgrund der o.g. kombinierten Maßnahmen verhindert. Demgemäß ist es möglich, die Beschichtung mittels eines Sprühverfahrens varianzunabhängig zu applizieren. Die geringe Schichtdicke bei einem Sprühvorgang ermöglich es, dass das Lösemittel ohne Fehlstellenbildung (Poren) zügig aus der Schicht diffundiert. Je nach Bedarf der Oberflächengüte und optischen Ansprüchen können weitere Schichten oder dickere Einzelschichten aufgebracht werden. Dies ist durch Prozessparameter einstellbar. Ein auf diese Weise entstandenes Gehäuse ist innerhalb von wenigen Stunden bei Raumtemperatur angehärtet (berührbar bzw. nicht klebend (tack free)) und nach ca. 48 Stunden bei Raumtemperatur vollständig gehärtet. Optional kann dies durch eine Temperaturerhöhung z.B. mit IR Strahler auf wenige Stunden verkürzt werden.

Für das gefüllte Verbundpolymer GPM kann bevorzugt die Materialklasse der Vergussharze und Gapfiller genutzt werden, welche durch ihren hohen Füllstoffgehalt eine geeignet hohe Viskosität aufweist. Es wird bevorzugt eine Kombination aus Thixotropierung und Lösemittelzugabe (mit geeigneter Verdunstungszahl) verwendet, um die o.g. Materialien additiv applizierbar (z.B. sprühbar) zu machen, jedoch die hochviskosen Eigenschaften zügig nach der Applikation sicherzustellen. Eine Applikation in mehreren dünnen Schichten ist hierbei zweckmäßig, dass das enthaltene Lösemittel porenfrei aus der Schicht diffundieren kann. Hierzu könnten zusätzliche, typische Additive für die Lackverarbeitung noch hinzugegeben werden, wie z.B. Entschäumer welche die Spannung des Lacks heruntersetzen, so dass Luftblasen nicht stabil bleiben. Diese Antrocknung sowie die innerhalb von Sekunden einsetzende Verdickung aufgrund der Thixotropierung liefert sukzessive eine geschlossene und stetige Schicht über dem unstetigen Substrat (Einzelblechkonturen). Dies ist mit herkömmlichen Lacksystemen nicht erreichbar.

Andere Methoden für höherviskose Systeme sind z.B. Spachteln, Rakeln, "Dickschichtpinseln". Diese Methoden sind aufgrund der Konturen etwas schwieriger anwendbar und nicht gut automatisierbar.

## Patentansprüche

1. Verfahren zur Herstellung einer Anordnung (ARG) umfassend einen Stator (STT) und ein Gehäuse (OCS) für eine dynamoelektrische Maschine, bei dem eine Anzahl von Statorblechen (SMS) zu einem Blechpaket (SMP) zusammengestellt sind, umfassend:
(a) Stapelweises Anordnen der Statorbleche (SMS) zu einem Blechpaket (SMP) entlang einer Axialrichtung,
**gekennzeichnet durch**
(b) Aufbringen eines gefüllten Verbundpolymers (GPF) zumindest auf die radiale Außenseite auf das Blechpaket (SMP), so dass eine Schicht oder mehrere aufgebrachte Schichten des gefüllten Verbundpolymers (GPF) das Gehäuse (OCS) zumindest teilweise ausbildet.

2. Verfahren nach Anspruch 1, wobei das gefüllte Verbundpolymer (GPF) sprühend aufgebracht wird.

3. Verfahren nach Anspruch 1 oder 2, wobei das Gehäuse (OCS) zu mindestens 50% bis 100% einer radialen Gehäusewandstärke aus einer Schicht oder mehreren aufgebrachten Schichten des gefüllten Verbundpolymers (GPF) ausbildet ist.

4. Verfahren nach Anspruch 1, 2 oder 3, wobei das gefüllte Verbundpolymer (GPF) bei Raumtemperatur eine Viskosität von mindestens 1000 mPas aufweist.

5. Verfahren nach einem der vorhergehenden Ansprüche, wobei das gefüllte Verbundpolymer (GPF) einen Zusatz von Lösemittel zur Viskositätserniedrigung zwischen 0 Gew.-% bis 5 Gew.-% aufweist.

6. Verfahren nach einem der vorhergehenden Ansprüche, wobei das gefüllte Verbundpolymer (GPF) Partikel enthält, die Partikel umfassend mindestens eine Zutat von:
- thermisch leitfähigen Partikeln, insbesondere aufweisend Bornitrid (BN) und/oder Aluminiumoxid (Al2O3) und/oder Quarzmehl und/oder Quarzgut,
- flammhemmenden Partikeln, insbesondere Aluminiumhydroxid (Al(OH)3),
- elektrisch isolierenden Partikeln (ISO), insbesondere Glimmer.

7. Verfahren nach einem der vorhergehenden Ansprüche, wobei das gefüllte Verbundpolymer (GPF) eine thixotrope Flüssigkeit ist.

8. Verfahren nach einem der vorhergehenden Ansprüche, umfassend
- Thixotropieren des gefüllten Verbundpolymers (GPF) mittels Zusatzes eines Thixotropiermittels vor dem Aufbringen.

9. Verfahren nach Anspruch 8, umfassend:
- Thixotropieren des gefüllten Verbundpolymers (GPF) mittels Zusatzes eines anorganischen Verdickers (ATH).

10. Verfahren nach Anspruch 9, umfassend:
- Thixotropieren des gefüllten Verbundpolymers (GPM) mittels Zusatzes von 0,1-5 Gew.-%, bevorzugt 0,1-2 Gew.-% pyrogener Kieselsäure (ARL).

11. Verfahren nach Anspruch 9 oder 10, umfassend:
- Festlegen eines Aufbringprozesses (APP) als einen von: Gießen (CST), Streichen (PNT), Pinseln (BRS), Dickschichtpinseln (TLB), Rakeln (SQG), Spachteln (SPT), Einpressen (PRI),
- Festlegen eines Viskositätsbereichs (VRG) des gefüllten Verbundpolymers (GPM) von 3.000-1.000.000 mPas in Abhängigkeit von dem festgelegten Aufbringprozess (APP) wobei das Verfahren für ein Aufbringen mittels Gießens (CST), Streichens (PNT), Pinselns (BRS), eine Festlegung der Viskosität (VSC) im Bereich bis zu 10.000 mPas vorsieht und für ein Aufbringen mittels Spachtelns oder Einpressens eine Festlegung der Viskosität im Bereich ab 10.000 mPas vorsieht,
- Herstellen der festgelegten Viskosität des gefüllten Verbundpolymers (GPM) mittels Zumischens von Verdickungsmitteln und/oder Zumischens von Partikeln und/oder mittels Thixotropierens (TXP).

12. Verfahren nach einem der vorhergehenden Ansprüche, wobei das gefüllte Verbundpolymer (GPM) als hochgefülltes Verbundpolymer (GPM) ausgebildet ist mit einen Partikelanteil (PRT) von bis zu 80 Gew.-%.

13. Verfahren nach mindestens dem vorhergehenden Anspruch 2, wobei das gefüllte Verbundpolymer (GPM) bevor es sprühend aufgebracht folgenden Vorbereitungsschritten zur Sprühbarmachung unterzogen wird:
a. Thixotropierung mittels eines anorganischen Additivs und
b. Zusatz eines Lösemittels mit einer Verdunstungszahl VDZ<1.

14. Anordnung umfassend einen Stator (STT) und ein Gehäuse (OCS) einer dynamoelektrischen Maschine, bei dem eine Anzahl von Statorblechen (SMS) zu einem Blechpaket (SMP) stapelweise entlang einer Axialrichtung benachbart zu einem Blechpaket (SMP) angeordnet sind,
wobei die Statorbleche (SMS) zueinander zumindest bereichsweise einen axialen Spalt aufweisen,
wobei das Blechpaket (SMP) zumindest radial außen mit einer Schicht eines gefüllten Verbundpolymers (GPF) versehen ist, so dass die aufgebrachte Schicht des gefüllten Verbundpolymers (GPF) das Gehäuse (OCS) ausbildet.

15. Anordnung (ARG) nach Anspruch 14, wobei die Anordnung (ARG) nach einem Verfahren gemäß mindestens einem der Ansprüche 1-13 hergestellt ist.

16. Anordnung (ARG) nach Anspruch 14 oder 15, wobei zumindest einige Statorbleche (SMS) mindestens einen nach radial außen gegenüber der benachbarten Umfangskontur fortgesetzten Rippenabschnitt (RPS) aufweisen, der sich zumindest über einen Abschnitt des Umfangs erstreckt.

17. Verwendung einer Anordnung (ARG) nach Anspruch 14, 15 oder 16 für einen Prozess zur Herstellung oder Verarbeitung von Nahrungsmitteln, pharmazeutischen Produkten oder kosmetischen Produkten.

18. Verwendung eines aushärtend ausgebildeten, thixotropierten, gefüllten Verbundpolymers (GPF) als Gehäuse (OCS) eines Stators (STT) für eine dynamoelektrische Maschine.
